# EUROPEAN PATENT SPECIFICATION

(11) **EP 2 587 232 B1**
(45) Date of publication and mention of the grant of the patent: **05.06.2019**
(21) Application number: 11186937.6
(22) Date of filing: 27.10.2011
(51) Int. Cl.: G01H 11/02

(54) **System and method for detecting mechanical vibrations**
System und Verfahren zur Detektion mechanischer Schwingungen
Système et procédé de détection de vibrations mécaniques

(43) Date of publication of application: 01.05.2013
(73) Proprietor: Universität des Saarlandes, 66123 Saarbrücken (DE)
(72) Inventor: Hartmann, Uwe, 66386 St. Ingbert (DE)
(74) Representative: Lecomte & Partners

(56) References cited:
- WO-A2-2010/002263
- US-A- 3 747 036
- US-A- 3 846 790
- US-A- 4 951 500
- US-B1- 6 267 000

## Description

### Field of the invention

The present invention is directed to the monitoring of mechanical vibrations, in particular associated with safety areas and/or the status of machines or machine components.

### Background of the invention

Security barriers such as fences or gates have often the purpose of protecting sensitive security areas as for instance airports, power plants, and military or industrial sites.

Unfortunately such areas are often very large and difficult to monitor in order to prevent unauthorized access or other safety violations. Normally, a large number of cameras is used which have to be controlled via a human individual or, in other cases, a security service patrols the respective areas. In either case a continuous surveillance cannot be guaranteed and is subject to human failure.

Other security measures may comprise the use of light barriers or of infra red and ultrasound detectors. However, these types of sensors are also not appropriate for the surveillance of large areas and might generate false alarms caused for instance by animals.

In some applications acceleration or acoustic sensors are used to monitor the status of security barriers. Such systems have the disadvantage that they might also initiate false alarms caused by noise. Therefore, these systems normally require a sophisticated and expensive noise shielding.

Another disadvantage consists in that many of the prior art systems have a minor performance in case of bad weather conditions or at night.

Even more, some objects are extremely difficult to monitor as e.g. rails or bridges comprising often a large number of pillars and/or steel ropes.

Moreover, many existing security surveillance devices require sophisticated technical support and are difficult and expensive to install.

In other cases, it is often desired to monitor and control the function of machines and industrial plants, for example. Normally, machines and devices of industrial plants are controlled via different sensors as for example temperature sensors which may indicate a possible mechanical defect. In other cases devices are manually checked by service personnel. However, the interval between two services may be quite long so that defects are often discovered late which results in high repair costs. Therefore, it is desirable to identify possible damages or failures already at an early stage.

In view of the above discussed prior art, it is an objection of the present invention to provide a device which is able to allow for a cheap, reliable, and/or easier surveillance of objects, in particular of security areas or technical devices.

Another object of the present invention is to overcome at least one of the above mentioned disadvantages.

US 3,846,790 and US 3,747,036 disclose cables in accordance with the preamble of appended claim 1.

### Summary of the invention

The above identified technical problem is solved by the present invention according to appended claim 1.

The cable or cable section according to the present invention can be easily used to monitor large security areas. For example, it could be attached to fences in order to monitor their status and to discover security breaches. The claimed cable is cheap to produce and does not require complex evaluation or shielding systems. Another advantage of the cable according to the present invention is that a wide spectrum of signal frequencies may be detected via the magnetic field sensors. In contrast, many other sensor types are restricted to narrow frequency ranges, as e.g. common acceleration or acoustic sensors. Thus, the cable could also be used to monitor a variety of vibration spectra of different mechanical devices.

In accordance with a preferred aspect of the invention, the means for transferring measurement signals comprise at least two wires to address the magnetic field sensors and/or to transfer signals measured by the magnetic field sensors. These means may be part of a bus system for controlling the plurality magnetic field sensors.

In accordance with another preferred aspect of the invention, the cable has a length of multiple meters, preferably of between 5 and 1000 m, and/or may have a diameter of between 0.002 m and 0,05 m. Thus, depending on the object to be monitored, the cable can be applied easily like a normal electrical cable.

In accordance with another preferred aspect of the invention, the cable comprises at least 10, preferably between 10 and 200 sensors arranged in a spaced relationship along the cable's length and/or between 1 and 100 sensors per 10 m of the cable's length. The exact number of sensors and/or their distance may depend on the actual application and object to be monitored.

In accordance with another preferred aspect of the invention, the cable further comprises at least one area designated for cutting the cable between two of the magnetic field sensors into two parts and terminal means may be provided in said designated area, so that each remaining part is still able to transfer measurement values of its magnetic field sensors. Thus, cable may be applied without extensive cost and with a minimum amount of reaming waste material.

Moreover, the present invention is directed to a measurement system comprising a cable according to one of the above mentioned aspects of the invention and a control system for reading the signals provided by the means for transferring measurement signals of the magnetic field sensors. The advantages of such a system correspond essentially to the advantages of above described cable according to the present invention.

Preferably, the control system comprises also an evaluation unit for comparing received measurement signals with at least one reference signal; and optionally for triggering an alarm signal if a received measurement signal matches a reference signal (spectrum) or if the amplitude of a received signal exceeds a defined threshold signal amplitude. It is thus possible to provide a reliable alarm on the basis of a definable reference signal spectrum or reference signal amplitude.

In another aspect of the invention, the evaluation unit is further adapted to assign the magnetic field spectra or fluctuation obtained by the magnetic field sensors to mechanical vibration spectra by means of known magnetic field vibration spectra corresponding to mechanical vibration reference spectra such that the type of mechanical vibration can be identified. Thus, the evaluation unit may output a (suspected) cause of mechanical vibration, as e.g. somebody climbing over a fence or a bridge vibrating due to strong winds.

The present invention is also directed to a method of measuring mechanical vibrations, preferably by means of a cable or a measurement system as described with respect to the present invention. The method may comprise one or more of the following steps: providing an object to be monitored with respect to mechanical vibrations of the object; monitoring the object by means of one or more, preferably at least two discrete magnetic field sensors; and comparing measurements signals received from the magnetic field sensors with at least one known reference signal (spectrum) or comparing the amplitudes of the measurements signals received from the magnetic field sensors with a defined threshold signal amplitude.

Preferably, the method may further comprise the step of triggering an alarm signal if a received signal (spectrum) matches a reference signal (spectrum) or if the amplitude of a received signal (spectrum) exceeds a defined threshold signal amplitude.

The method may also comprise the step of assigning the magnetic field spectra obtained by the magnetic field sensors to mechanical vibration spectra by means of known magnetic field vibration spectra corresponding to mechanical vibration reference spectra so as to identify the type of detected vibration.

In general, the object may be one or more of: a building, a bridge, a fence, a barrier, a vehicle, a tunnel, a railroad track, an aircraft, a ship, a train, a rocket, an engine, a transmission, a bearing, a turbine, a security container, a shipping container, a window element, a joist, a door, a gate, a rope, a wall. However, the invention is not necessarily limited to one of these objects.

The present invention is also directed to a monitorable system comprising at least one cable according to the invention and at least one of the above mentioned objects, wherein the cable adjoins at least one of the objects such that vibrations of the object can be detected via the cable.

Preferably, the cable is directly or indirectly connected to the object so that mechanical vibrations of the object are physically transferred to the cable. Thus, it is not necessary that the monitored object comprises ferromagnetic material or is connected to such a material. The monitored object may be completely non-magnetic, or diamagnetic, respectively. A relative motion or a tilt of the magnetic field sensors in the earth's magnetic field is also sufficient to detect a mechanical vibration of the object. Typically, the detected change of the earth's magnetic field per degree of tilt may be in the order of some nanotesla nT (for example between about 0.1 nT and about 10 nT). Alternatively, the cable may be spaced from the object (or may be arranged in proximity or vicinity of the object) and the object may comprise ferromagnetic material or may be connected to ferromagnetic material such that mechanical vibrations of the object and thus mechanical vibrations of the ferromagnetic material, may be sensed (detected) by the magnetic field sensors of the cable.

Optionally, the cable is connected to or comprises a piece (member) of ferromagnetic material so that mechanical vibrations of the object comprising also ferromagnetic material may excite mechanical vibrations of the piece of ferromagnetic material (via magnetic interaction forces between the object and the piece of ferromagnetic material).

In all mentioned examples, the cable may additionally comprise further sensor types, as e.g. additional acceleration or temperature sensors. Such additional sensors may also be integrated in the cable and might be connected to and/or addressed by a control or evaluation system via connection means. In particular such additional sensors could be arranged serially along and/or within the cable. Thus, it is possible to obtain further information via the cable which may allow for an improved recognition/classification of signals detected via the magnetic field sensors.

All the above mentioned features may be combined with each other.

### Brief description of the drawings

The following brief description of the appended drawings is intended to give a brief overview with regard to some embodiments of the present invention and shall not be understood in a limiting sense.

More details are given in the detailed description of the embodiments.
- Figure 1: depicts a perspective, schematic view of a cable in accordance with an embodiment of the invention;
- Figure 2: schematically depicts a cable according to the invention mounted to a fence;
- Figure 3: schematically depicts on the left hand side a cable according to the invention mounted to a pillar of a bridge and on the right hand side a cable connected to the ropes of a suspension bridge; and
- Figure 4: shows a cable according to the present invention mounted to a machine body as well as another cable according to the present invention provided adjacent a separate piece comprising ferromagnetic material.

### Detailed description of the embodiments

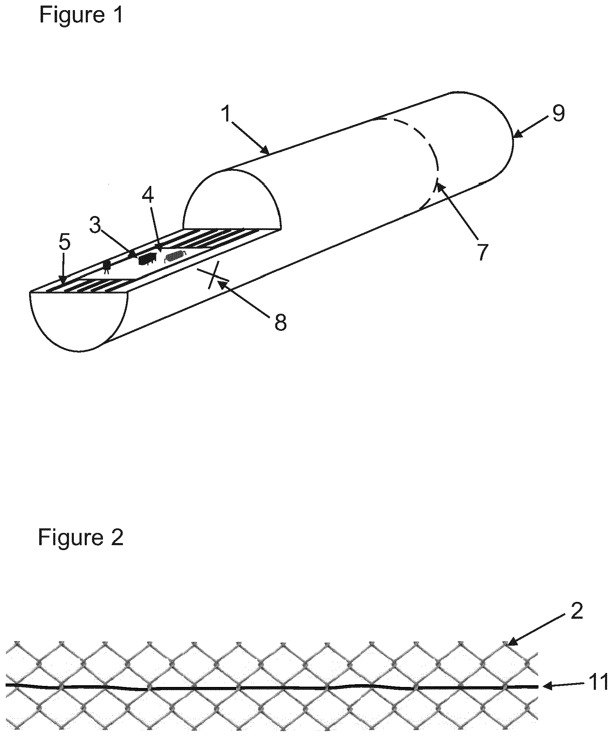

Figure 1 depicts a first embodiment of the invention showing a cable 1 equipped with magnetic field sensors 3 (only one sensor being explicitly shown in the figure). In particular the cable may comprise a plurality of discrete magnetic field sensors 3 spaced from each other in an axial direction of the cable 1. The sensors are provided on a printed circuit board 4 and may be connected with each other via wires 5. The wires 5 may supply the sensors 3 with electrical energy and/or may be suitable for transferring control and/or measurement signals.

Preferably, each sensor 3 is connected to one or two power supply lines 5 and to two or three control lines 5. The sensors 3, the printed circuit board 4 carrying the sensor 3, and all electrical lines or wires 5 may be coated by a cable coating. Such cable coatings are known in the state of the art and might for example comprise PVC or plastic material.

The printed circuit board 4 may be adapted to convert the magnetic field values or spectra measured by the magnetic field sensor 3 to electrical signals, especially to electrical analogous currents. Such currents may be proportional to the measured magnetic field values/amplitudes. Preferably, the size of a printed circuit board 4 may be between 2 mm and 50 mm and the size of a magnetic field sensor 3 may be between 2 mm and 30 mm.

Although the wires or lines 5 have been depicted as linear wires or lines 5 these could be also provided as braid wires or cylindrical or flat conductors. Further, the presence of a printed circuit board 4 or chip 4 is not necessary. The magnetic field sensor 3 may be configured to provide electrical signals as such.

The outer surface of the cable 1, i.e. of its coating, may be provided with marks 8 indicating the position of a magnetic field sensor 3 inside the cable 1. This might be of interest in case of a very large distance between two neighboring sensors 3 so that a sensor 3 can be easily placed at a desired position. Alternatively or in addition, the cable may also comprise marks indicating cutting sections 7 at which the cable 1 may be cut without degrading the measurements abilities of the cable 1.

In particular, it is possible to arrange cutting sections 7 between two of the magnetic field sensors 3 by providing the cable 1 (especially the wires 5 of the cable) with appropriate terminal resistors. How such terminal resistors may be provided is already known to the person skilled in the art for other types of electrical (signal) cables. It is also known to branch the cable 1 at one of its ends by means of standard transmitters. Optionally, the end of a cable 1 may be provided with an end connector 9 adapted for connection of the cable 1 to a control system. In particular, the end of the cable 1 may be provided with a plug or a socket adapted to conduct electrical currents and/or measurement or control signals.

In general, the cable 1 may be connected at both ends with a control or evaluation system such that even if the cable is cut, both remaining halves remain operational. Moreover, the region of cutting the cable, and thus of a possible security breach, may be generally detected, as e.g. by a sensor neighboring the cutting location.

The cable is depicted with a cylindrical cross section but may also have any other cross section such as a rectangular, triangular or ovoid cross section. Further, the cable 1 may be flexible, as for example known electrical cables, thus allowing an easy installation.

Figure 2 depicts a cable 11 connected to a fence 2 in accordance with a further embodiment of the invention

In particular, it may be desirable to monitor a fence 2 for security reasons, e.g. to detect damaging of the fence 2 by unauthorized individuals or, for example, to detect persons climbing over the latter. In other cases wild animals may damage the fence 2 or wild boars might try to erode the fence 2. For example, this might result in severe danger on motorways or airports.

It is remarked that the fence or any other object to be monitored with respect to mechanical vibrations does not need to be made of or comprise ferromagnetic material. In contrast, it could be even made of wood or plastics. Mechanical vibration of the fence 2 or another object to be monitored, results also in a mechanical vibration of the cable 1, 11. Such a vibration of the cable results in a relative movement of the cable 1 in the earth's magnetic field so that the magnetic field sensors 3 can also detect this change. Thus, a mechanical vibration spectrum can be detected by the magnetic field sensor 3 via its relative movement in the surrounding magnetic field so that also (corresponding) magnetic field spectra or fluctuations can be observed or measured by the magnetic field sensor(s) 3.

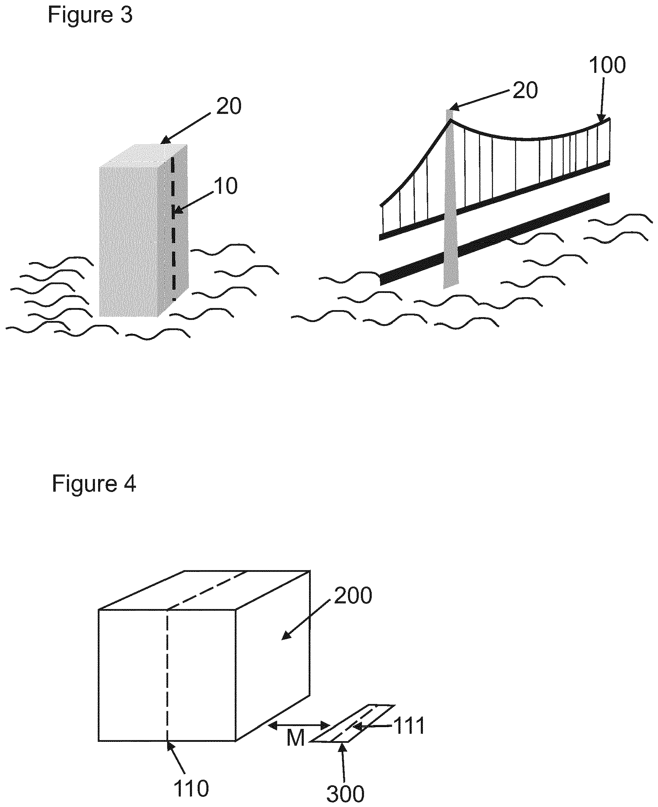

Figure 3 depicts another exemplary embodiment of the present invention in which a cable 10 is connected to a pillar 20 of a bridge standing in a river, a lake or the sea (see left hand side of figure 3).

In particular, it might be desirable to monitor the pillars for security reasons, e.g. to detect a collision with flotsam, icebergs, or ships. Other possible threads for bridges may comprise oscillations due to wind. Such mechanical movements, oscillations or vibrations may be detected via a cable 1, 10, 100 according to the present invention.

As in the above example, pillars 20 do not need to comprise ferromagnetic material and may also be made of concrete, non-ferromagnetic stainless steel or wood, etc.

Alternatively or in addition, a cable 100 according to the present invention may be coupled to ropes of a suspension bridge (see right hand side of figure 3) which might be desirable in order to monitor the stability of the bridge.

Figure 4 depicts another exemplary embodiment within the scope of the present invention. A cable 110 may be connected to a machine (body) 200 and may thus be able to detect and monitor mechanical vibrations of such a machine 200, e.g. of an engine, a gear box, a turbine, a generator, etc. In particular, such machines often comprise bearings but also other moving parts which may exhibit a certain wear after some time in service. In many cases a repair at low costs is possible if the defect is detected early, otherwise increasing wear of mechanical components may result in severe damages and complete breakdowns.

Using a cable 1, 10, 11, 110, 111 according to the present invention constitutes an easy, cheap and reliable method of monitoring even large mechanical systems. Mechanical vibration spectra of machines may be detected via the electromagnetic field sensors 3. Depending on the size and form of the machine 200 and the number of magnetic field sensors 3 in the cable 1, 10, 11, 110, 111, it might also be possible to determine the position of a damage.

As mentioned already above, there are several possibilities of arranging the cable 1, 10, 11, 110, 111 with respect to the object to be monitored. For example, the cable may be directly connected to the object 2, 20, 200 to be monitored.

In other cases the cable 1, 10, 11, 110, 111 according to the present invention may be arranged at a distance from the object to be monitored. The object subject to mechanical vibrations might comprise or may be connected to ferromagnetic material so that the movement of this ferromagnetic material may be sensed by the magnetic field sensors 1 of the cable 1.

Alternatively or in addition, the cable 1, 111 or sensors 3 as such may comprise or may be connected to ferromagnetic material 300, so that mechanical vibrations of the object may induce a movement of the ferromagnetic material 300 via magnetic forces M, resulting in a movement of the cable 1 and thus of the sensors 3.

Thus, the mechanical vibration spectra produce also magnetic field vibration spectra or fluctuations, as e.g. by the relative movement of the sensor 3 in the earth's magnetic field and/or by detecting the changing magnetic field of a ferromagnetic component of the object 2, 20, 200 to be monitored.

The mechanical vibration of the monitored vibrating object 2, 20, 200 results in a fluctuation of the magnetic field sensed by the magnetic field sensors 3 of the cable 1.

In general, it is also possible that ferromagnetic material is also integrated in the coating of the cable 1. Alternatively, the cable's wires 5 may comprise ferromagnetic material.

Another possibility consists in that the cable 1 is integrated into the object to be monitored, as e.g. molded into the object.

In general, it is also possible to record or to measure mechanical vibration reference spectra for one or more of the objects to be monitored.

For example, a specific type of a fence could be subject to cutting by a saw or a bolt cutter so that even the type of security breach could be identified by comparing an actually measured vibration spectrum with the previously recorded reference spectrum.

However, such recorded mechanical vibration reference spectra are not necessary for carrying out the invention. It is also possible to merely observe a change in the normal (usual or zero) vibration spectrum of the monitored object (which depends on the monitored object) to identify an abnormal vibration of the object. If such an abnormal vibration is detected, it can be possible to trigger an alarm signal. Then, for instance, security or technical personal may check the site where the abnormal vibration has occurred, so that a security breach or machine damage or failure can be quickly and efficiently identified.

In general it is mentioned that the magnetic field sensors 3 according to the present invention may be connected with a control system via a bus system. Such bus systems are known in the state of the art and serve to receive, control, and/or evaluate a plurality of signals. In the present case a plurality of signals may be generated by the plurality of magnetic field sensors. These signals may be read serially or in parallel depending on the utilized type of bus system. Such bus systems are known to the person skilled in the art. In other words, the cable according to the present invention may be described as a bus cable including a plurality of magnetic field sensors. Preferably, more than 100 sensors may be coupled to the bus system. In general, it may be possible to selectively read information from a certain sensor.

Magneto resistive sensors 3 are used as magnetic field sensors 3, as for example one or more of: anisotropic magneto-resistive sensors (AMR), giant magneto resistance/impedance sensors (GMI), or tunneling magneto resistance sensors (TMR). These exemplary sensor types are known to the person skilled in the art. Preferably, the sensors 3 could be provided in the form of Wheatstone-bridges.

In addition, it is possible to provide at least three (axially) neighboring sensors to be able to define a multidimensional space (two or three dimensions). The exact interpretation of the sensors' signals may depend on the actual arrangement of the cable 1, 10, 11, 110, 111 with respect to the object 2, 20, 200 and the actual spacing of the sensors 3. However, these values are either planned before or known after installation of the cable 1, 10, 11, 110, 111.

In order to further improve the sensitivity of the magnetic field measurement, it is also possible to cancel static magnetic fields by means of an AC-coupling. Such methods are known to the person skilled in the art.

All above mentioned features may be combined with one another in any combination.

In any case the person skilled in the art may adapt features of the present invention to actual requirements or an underlying problem.

### List of reference signs

- 1: cable / cable section
- 2: fence
- 3: magnetic field sensor
- 4: printed circuit board
- 5: means for transferring measurement signals
- 7: cutting area
- 8: sensor position mark
- 9: end connector
- 10: cable connected to pillar
- 11: cable connected to fence
- 100: cable connected to steel rope
- 110: cable connected to machine body
- 111: cable coupled to piece comprising ferromagnetic material
- 20: pillar
- 200: machine body
- 300: piece comprising ferromagnetic material / ferromagnetic member
- M: magnetic interaction force

## Claims

1. A cable (1, 10, 11, 100, 110, 111) for detecting mechanical vibrations by magnetic field measurement, the cable (1, 10, 11, 100, 110, 111) comprises:
a plurality of discrete magnetic field sensors (3) arranged in a spaced relationship along and within the cable;
means for providing each magnetic field sensor (3) with electrical power; and
means (5) for transferring measurement signals of each magnetic field sensor (3) through the cable (1, 10, 11, 100, 110, 111),
**characterized in that**
each magnetic field sensor (3) is a magneto resistive sensor (3), and
the cable (1, 10, 11, 100, 110, 111) comprises a plurality of printed circuit boards (4), each printed circuit board (4) carrying one of the magneto resistive sensors (3).

2. The cable (1, 10, 11, 100, 110, 111) according to claim 1, wherein each printed circuit board (4) is adapted to convert magnetic field values measured by the magneto resistive sensor (3) carried thereon into analog electrical currents.

3. The cable (1, 10, 11, 100, 110, 111) according to claim 1 or 2, wherein the means (5) for transferring measurement signals comprise at least two wires (5) to address the magnetic field sensors (3) and/or to transfer signals measured by the magnetic field sensors (3).

4. The cable (1, 10, 11, 100, 110, 111) according to one of the preceding claims, wherein the cable (1, 10, 11, 100, 110, 111) has a length of multiple meters, preferably of between 5 and 1000 m, and/or has a diameter of between 0.002 m and 0,05 m.

5. The cable (1, 10, 11, 100, 110, 111) according to one of the preceding claims, wherein the cable (1, 10, 11, 100, 110, 111) comprises at least 10, preferably between 10 and 200 sensors (3) arranged in a spaced relationship along the cable's length and/or between 1 and 100 sensors (3) per 10 m of the cable's length.

6. The cable (1, 10, 11, 100, 110, 111) according to one of the preceding claims, wherein the cable (1, 10, 11, 100, 110, 111) further comprises at least one area (7) designated for cutting the cable (1, 10, 11, 100, 110, 111) between two of the magnetic field sensors (3) into two parts and wherein terminal means are arranged in said designated area, so that each remaining part is still adapted to transfer measurement values of its magnetic field sensors (3).

7. A measurement system comprising:
a cable (1, 10, 11, 100, 110, 111) according to one of the preceding claims, and
a control system for reading the signals provided by the means (5) for transferring measurement signals of the magnetic field sensors (3).

8. The measurement system of claim 7, wherein the control system further comprises an evaluation unit for comparing received measurement signals with at least one reference signal; and optionally for triggering an alarm signal if a received signal matches a reference signal or if the amplitude of a received signal exceeds a defined threshold signal amplitude.

9. The measurement system of claim 8, wherein the evaluation unit is further adapted to assign the magnetic field spectra obtained by the magnetic field sensors (3) to mechanical vibration spectra by means of known magnetic field vibration spectra corresponding to mechanical vibration reference spectra such that the type of mechanical vibration can be identified.

10. A method for measuring mechanical vibrations by means of the cable (1, 10, 11, 100, 110, 111) according to one of claims 1-6 or the measurement system according to one of claims 7-9, the method comprising the steps of:
providing an object (2, 20, 200) to be monitored with respect to mechanical vibrations of the object (2, 20, 200);
monitoring the object (2, 20, 200) by means of at least two of the discrete magnetic field sensors (3);
comparing measurement signals received from the magnetic field sensors (3) with at least one known reference signal or comparing the amplitudes of the measurement signals received from the magnetic field sensors (3) with a defined threshold signal amplitude.

11. The method of claim 10, wherein the method further comprises the step of:
triggering an alarm signal if a received signal matches a reference signal or if the amplitude of a received signal exceeds a defined threshold signal amplitude.

12. The method according to claim 10 or 11, the method further comprising:
assigning the magnetic field spectra obtained by the magnetic field sensors (3) to mechanical vibration spectra by means of known magnetic field vibration spectra corresponding to mechanical vibration reference spectra so as to identify the type of detected vibration.

13. The method according to one of the claims 10-12, wherein the object is one or more of: a building, a bridge (20), a fence (2), a barrier, a vehicle, a tunnel, a railroad track, an aircraft, a ship, a train, a rocket, an engine (200), a transmission, a bearing, a turbine, a security container, a shipping container, a window element, a joist, a door, a gate, a rope and a wall.

14. A monitorable system comprising:
the cable (1, 10, 11, 100, 110, 111) according to one of claims 1 to 6 or a measurement system according to one of claims 7 to 9, and
at least one object (2, 20, 200) chosen from the list of: a building, a bridge (20), a fence (2), a barrier, a vehicle, a tunnel, a railroad track, an aircraft, a ship, a train, a rocket, an engine (200), a transmission, a bearing, a turbine, a security container, a shipping container, a window element, a joist, a door, a gate, a rope and a wall, wherein
the cable (1, 10, 11, 100, 110, 111) adjoins the object such that vibrations of the object (2, 2, 20, 200) can be detected via the cable (1, 10, 11, 100, 110, 111).

15. The monitorable system according to claim 14, wherein
the cable (1, 10, 11, 100, 110) is directly or indirectly connected to the object (2, 20, 200) so that mechanical vibrations of the object (2, 20, 200) can be physically transferred to the cable (1, 10, 11, 100, 110) and result in a relative movement of the magnetic field sensor (3) in the earth's magnetic field; or wherein
the cable (1, 111) is spaced from the object (200) and wherein
the object (200) comprises ferromagnetic material or is connected to ferromagnetic material such that mechanical vibrations of the object (200) and thus mechanical vibrations of the ferromagnetic material, can be sensed by the magnetic field sensors (3) of the cable (1, 111) and
optionally, the cable (1, 111) as such is connected to or comprises a piece of ferromagnetic material (300) so that mechanical vibrations of the object (200) comprising also ferromagnetic material can excite mechanical vibrations of the piece of ferromagnetic material (300) via magnetic interaction forces (M) between the object (200) and the piece of ferromagnetic material (300).

## Patentansprüche

1. Eine Leitung (1, 10, 11, 100, 110, 111) zum Detektieren von mechanischen Vibrationen durch Magnetfeldmessung, wobei die Leitung (1, 10, 11, 100, 110, 111) umfasst:
eine Mehrzahl von diskreten Magnetfeldsensoren (3), die beabstandet voneinander entlang und innerhalb der Leitung angeordnet sind;
Mittel zum Vorsorgen von jedem Magnetfeldsensor (3) mit elektrischer Energie; und
Mittel (5) zum Transferieren von Messsignalen von jedem Magnetfeldsensor (3) durch die Leitung (1, 10, 11, 100, 110, 111),
**gekennzeichnet dadurch, dass**
jeder Magnetfeldsensor (3) ein magnetoresistiver Sensor (3) ist und
die Leitung (1, 10, 11, 100, 110, 111) eine Mehrzahl von Platinen (4) umfasst, wobei jede Platine (4) einen der magnetoresistiven Sensoren (3) trägt.

2. Die Leitung (1, 10, 11, 100, 110, 111) gemäß Anspruch 1, wobei jede Platine (4) dazu angepasst ist, Magnetfeldwerte, die von dem magnetoresistiven Sensor (3) gemessen wurden, der auf ihr getragen wird, in analoge elektrische Ströme umzuwandeln.

3. Die Leitung (1, 10, 11, 100, 110, 111) gemäß Anspruch 1 oder 2, wobei die Mittel (5) zum Transferieren von Messsignalen zumindest zwei Kabel (5) umfassen, um die Magnetfeldsensoren (3) anzusprechen und/oder um Signale zu transferieren, die von den Magnetfeldsensoren (3) gemessen wurden.

4. Die Leitung (1, 10, 11, 100, 110, 111) gemäß einem der vorhergehenden Ansprüche, wobei die Leitung (1, 10, 11, 100, 110, 111) eine Länge von mehreren Metern hat, vorzugsweise zwischen 5 und 1000 m, und/oder einen Durchmesser von zwischen 0,002 m und 0,05 m hat.

5. Die Leitung (1, 10, 11, 100, 110, 111) gemäß einem der vorhergehenden Ansprüche, wobei die Leitung (1, 10, 11, 100, 110, 111) zumindest 10, vorzugsweise zwischen 10 und 200 Sensoren (3) umfasst, die voneinander beabstandet entlang der Länge der Leitung angeordnet sind, und/oder zwischen 1 und 100 Sensoren (3) pro 10 m Leitungslänge.

6. Die Leitung (1, 10, 11, 100, 110, 111) gemäß einem der vorhergehenden Ansprüche, wobei die Leitung (1, 10, 11, 100, 110, 111)weiter zumindest einen Bereich (7) umfasst, der zum Durchschneiden der Leitung (1, 10, 11, 100, 110, 111) zwischen zwei der Magnetfeldsensoren (3) in zwei Teile bestimmt ist, und wobei Anschlussmittel in diesem vorbestimmten Bereich angeordnet sind, sodass jedes verbleibende Teil weiter dazu angepasst ist, Messwerte seiner Magnetfeldsensoren (3) zu transferieren.

7. Ein Messsystem umfassend:
eine Leitung (1, 10, 11, 100, 110, 111) gemäß einem der vorhergehenden Ansprüche, und
ein Steuerungssystem zum Lesen der Signale, die von den Mitteln (5) zum Transferieren der Messsignale der Magnetfeldsensoren (3) bereitgestellt werden.

8. Das Messsystem von Anspruch 7, wobei das Steuerungssystem weiter eine Bewertungseinheit umfasst zum Vergleichen von empfangenen Messsignalen mit zumindest einem Referenzsignal; und optional zum Auslösen eines Alarmsignals, wenn ein empfangendes Signal mit einem Referenzsignal übereinstimmt oder wenn die Amplitude eines empfangenen Signals eine definierte Schwellsignalamplitude übersteigt.

9. Das Messsystem von Anspruch 8, wobei die Bewertungseinheit weiter dazu angepasst ist, die Magnetfeldspektren, die von den Magnetfeldsensoren (3) erhalten worden sind, mechanischen Vibrationsspektren mittels bekannten Magnetfeldvibrationsspektren, die mechanischen Vibrationsreferenzspektren entsprechen, zuzuordnen, derart, dass die Art der mechanischen Vibration identifiziert werden kann.

10. Ein Verfahren zum Messen von mechanischen Vibrationen mittels der Leitung (1, 10, 11, 100, 110, 111) gemäß einem der Ansprüche 1-6 oder dem Messsystem gemäß einem der Ansprüche 7-9, wobei das Verfahren die Schritte aufweist des:
Bereitstellens eines Objektes (2, 20, 200). das hinsichtlich der mechanischen Vibrationen des Objektes (2, 20, 200) zu überwachen ist;
Überwachens des Objektes (2, 20, 200) mittels zumindest zweier der diskreten Magnetfeldsensoren (3);
Vergleichens der Messsignale, die von den Magnetfeldsensoren (3) empfangen worden sind, mit zumindest einem bekannten Referenzsignal oder des Vergleichens der Amplituden der Messsignale, die von den Magnetfeldsensoren (3) empfangen worden sind, mit einer definierten Schwellsignalamplitude.

11. Das Verfahren von Anspruch 10, wobei das Verfahren weiter den Schritt aufweist des:
Auslösens eines Alarms, wenn ein empfangendes Signal mit einem Referenzsignal übereinstimmt oder wenn die Amplitude eines empfangenen Signals eine definierte Schwellsignalamplitude übersteigt.

12. Das Verfahren von Anspruch 10 oder 11, wobei das Verfahren weiter umfasst:
Zuordnen der Magnetfeldspektren, die von den Magnetfeldsensoren (3) erhalten worden sind, zu mechanischen Vibrationsspektren mittels bekannten Magnetfeldvibrationsspektren, die mechanischen Vibrationsreferenzspektren entsprechen, sodass die Art der detektierten Vibration identifiziert werden kann.

13. Das Verfahren gemäß einem der Ansprüche 10-12, wobei das Objekt eines oder mehrere ist von: einem Gebäude, einer Brücke (20), einem Zaun (2), einer Absperrung, einem Fahrzeug, einem Tunnel, einer Bahnstrecke, einem Flugzeug, einem Schiff, einem Zug, einer Rakete, einem Antrieb (200), einem Getriebe, einem Lager, einer Turbine, einem Sicherheitsbehälter, einem Schiffscontainer, einem Fensterelement, einem Unterzug, einer Tür, einem Tor, einem Seil und einer Wand.

14. Ein überwachbares System umfassend:
die Leitung (1, 10, 11, 100, 110, 111) gemäß einem der Ansprüche 1-6 oder ein Messsystem gemäß einem der Ansprüche 7-9, und
zumindest ein Objekt (2, 20, 200) ausgewählt aus der Liste aus: einem Gebäude, einer Brücke (20), einem Zaun (2), einer Absperrung, einem Fahrzeug, einem Tunnel, einer Bahnstrecke, einem Flugzeug, einem Schiff, einem Zug, einer Rakete, einem Antrieb (200), einem Getriebe, einem Lager, einer Turbine, einem Sicherheitsbehälter, einem Schiffscontainer, einem Fensterelement, einem Unterzug, einer Tür, einem Tor, einem Seil und einer Wand, wobei
die Leitung (1, 10, 11, 100, 110, 111) derart an dem Objekt angrenzt, dass Vibrationen des Objektes (2, 2, 20, 200) über die Leitung (1, 10, 11, 100, 110, 111) detektiert werden können.

15. Das überwachbare System von Anspruch 14, wobei
die Leitung (1, 10, 11, 100, 110, 111) direkt oder indirekt mit dem Objekt (2, 20, 200) verbunden ist, sodass mechanische Vibrationen des Objektes (2, 20, 200) körperlich an die Leitung (1, 10, 11, 100, 110) übertragen werden können und in einer relativen Bewegung des Magnetfeldsensors (3) in dem Magnetfeld der Erde resultieren; oder wobei
die Leitung (1, 10, 11, 100, 110, 111) von dem Objekt (200) beabstandet ist und wobei
das Objekt (200) ein ferromagnetisches Material umfasst oder mit einem ferromagnetischen Material verbunden ist, derart, dass mechanische Vibrationen des Objektes (200) und dadurch mechanische Vibrationen des ferromagnetischen Materials von den Magnetfeldsensoren (3) der Leitung (1, 111) sensiert werden können, und,
optional, die Leitung (1, 111) als solche mit einem Stück eines ferromagnetischen Materials (300) verbunden ist oder es enthält, sodass mechanische Vibrationen des Objektes (200), das auch ferromagnetisches Material enthält, mechanische Vibrationen des Stückes ferromagnetischen Materials (300) über magnetische Wechselwirkungskräfte (M) zwischen dem Objekt (200) und dem Stück ferromagnetischen Materials (300) anregen können.

## Revendications

1. Câble (1, 10, 11, 100, 110, 111) destiné à détecter des vibrations mécaniques par l'intermédiaire d'une mesure du champ magnétique, le câble (1, 10, 11, 100, 110, 111) comprenant :
un certain nombre de capteurs discrets du champ magnétique (3) disposés à l'écart les uns des autres le long du câble et au sein de ce dernier;
des moyens pour alimenter en électricité chaque capteur du champ magnétique (3) ; et
des moyens (5) pour transférer des signaux de mesure de chaque capteur du champ magnétique (3) à travers le câble (1, 10, 11, 100, 110, 111) ;
**caractérisé en ce que**
chaque capteur du champ magnétique (3) représente un capteur magnétorésistant (3) ; et
le câble (1, 10, 11, 100, 110, 111) comprend un certain nombre de cartes de circuits imprimés (4), chaque carte de circuits imprimés (4) supportant un des capteurs magnétorésistants (3).

2. Câble (1, 10, 11, 100, 110, 111) selon la revendication 1, dans lequel chaque carte de circuits imprimés (4) est conçue pour convertir en courants électriques analogiques des valeurs de champ magnétique mesurées par le capteur magnétorésistant.

3. Câble (1, 10, 11, 100, 110, 111) selon la revendication 1 ou 2, dans lequel les moyens (5) destinés au transfert des signaux de mesure comprennent au moins deux fils métalliques (5) destinés à l'adressage des capteurs du champ magnétique (3) et/ou au transfert des signaux mesurés par les capteurs du champ magnétique (3).

4. Câble (1, 10, 11, 100, 110, 111) selon l'une quelconque des revendications précédentes, dans lequel le câble (1, 10, 11, 100, 110, 111) possède une longueur de plusieurs mètres, de préférence entre 5 et 1000 m, et/ou possède un diamètre entre 0,002 m et 0,05 m.

5. Câble (1, 10, 11, 100, 110, 111) selon l'une quelconque des revendications précédentes, dans lequel le câble (1, 10, 11, 100, 110, 111) comprend au moins 10, de préférence entre 10 et 200 capteurs (3) disposés à distance les uns des autres sur la longueur du câble et/ou entre 1 et 100 capteurs (3) par 10 m de la longueur du câble.

6. Câble (1, 10, 11, 100, 110, 111) selon l'une quelconque des revendications précédentes, dans lequel le câble (1, 10, 11, 100, 110, 111) comprend en outre au moins une zone (7) conçue pour couper le câble (1, 10, 11, 100, 110, 111) entre deux des capteurs du champ magnétique (3) en deux parties et dans lequel des moyens terminaux sont disposés dans ladite zone en question, d'une manière telle que chaque partie restante est toujours conçue pour le transfert des valeurs de mesure de ses capteurs du champ magnétique (3).

7. Système de mesure comprenant :
un câble (1, 10, 11, 100, 110, 111) selon l'une quelconque des revendications précédentes ; et
un système de commande pour la lecture des signaux fournis par les moyens (5) destinés au transfert des signaux de mesure des capteurs du champ magnétique (3).

8. Système de mesure selon la revendication 7, dans lequel le système de commande comprend en outre une unité d'évaluation destinée à comparer des signaux de mesure reçus à au moins un signal de référence ; et le cas échéant destinée à déclencher un signal d'alarme lorsqu'un signal reçu correspond à un signal de référence ou lorsque l'amplitude d'un signal reçu dépasse une amplitude de signal seuil définie.

9. Système de mesure selon la revendication 8, dans lequel l'unité d'évaluation est en outre conçue pour attribuer les spectres du champ magnétique obtenus par l'intermédiaire des capteurs du champ magnétique (3) à des spectres de vibrations mécaniques au moyen de spectres connus de vibrations du champ magnétique correspondant à des spectres de référence de vibrations mécaniques, d'une manière telle que le type de vibrations mécaniques peut être identifié.

10. Procédé pour la mesure de vibrations mécaniques au moyen du câble (1, 10, 11, 100, 110, 111) selon l'une quelconque des revendications 1 à 6, ou du système de mesure selon l'une quelconque des revendications 7 à 9, le procédé comprenant les étapes consistant à :
procurer un objet (2, 20, 200) qui doit être surveillé en ce qui concerne les vibrations mécaniques de l'objet (2, 20, 200) ;
surveiller l'objet (2, 20, 200) au moyen d'au moins deux des capteurs discrets du champ magnétique (3) ;
comparer les signaux de mesure reçus à partir des capteurs du champ magnétique (3) à au moins un signal de référence connu ou comparer les amplitudes des signaux de mesure reçus à partir des capteurs du champ magnétique (3) à une amplitude de signal seuil définie.

11. Procédé selon la revendication 10, dans lequel le procédé comprend en outre l'étape consistant à :
déclencher un signal d'alarme lorsqu'un signal reçu correspond à un signal de référence ou lorsque l'amplitude d'un signal reçu dépasse une amplitude de signal seuil définie.

12. Procédé selon la revendication 10 ou 11, le procédé comprenant en outre le fait de :
attribuer les spectres du champ magnétique obtenus par l'intermédiaire des capteurs du champ magnétique (3) à des spectres de vibrations mécaniques au moyen de spectres connus de vibrations du champ magnétique correspondant à des spectres de référence de vibrations mécaniques de manière à identifier le type de vibrations détecté.

13. Procédé selon l'une quelconque des revendications 10 à 12, dans lequel l'objet représente un ou plusieurs éléments choisis parmi : un bâtiment, un pont (20), une clôture (2), une barrière, un véhicule, un tunnel, un rail de chemin de fer, un avion, un bateau, un train, une fusée, un moteur (200), une transmission, un palier, une turbine, un contenant de sécurité, un conteneur d'expédition, un élément d'une fenêtre, une solive, une porte, une grille, une corde et un mur.

14. Système qui peut être surveillé, comprenant :
le câble (1, 10, 11, 100, 110, 111) selon l'une quelconque des revendications 1 à 6 ou un système de mesure selon l'une quelconque des revendications 7 à 9 ; et
au moins un objet (2, 20, 200) choisi parmi la liste comprenant : un bâtiment, un pont (20), une clôture (2), une barrière, un véhicule, un tunnel, un rail de chemin de fer, un avion, un bateau, un train, une fusée, un moteur (200), une transmission, un palier, une turbine, un contenant de sécurité, un conteneur d'expédition, un élément d'une fenêtre, une solive, une porte, une grille, une corde et un mur;
dans lequel le câble (1, 10, 11, 100, 110, 111) est contigu à l'objet d'une manière telle que des vibrations de l'objet (2, 2, 20, 200) peuvent être détectées par l'intermédiaire du câble (1, 10, 11, 100, 110, 111).

15. Système qui peut être surveillé selon la revendication 14, dans lequel :
le câble (1, 10, 11, 100, 110) est relié de manière directe ou indirecte à l'objet (2, 20, 200) d'une manière telle que des vibrations mécaniques de l'objet (2, 20, 200) peuvent être transférées de manière physique au câble (1, 10, 11, 100, 110) et donner lieu à un mouvement relatif du capteur du champ magnétique (3) dans le champ magnétique terrestre ; ou dans lequel
le câble (1, 111) est espacé de l'objet (200), et dans lequel :
l'objet (200) comprend un matériau ferromagnétique ou est relié à un matériau ferromagnétique d'une manière telle que des vibrations mécaniques de l'objet (200), partant des vibrations mécaniques du matériau ferromagnétique, peuvent être détectées par les capteurs du champ magnétique (3) du câble (1, 111) ; et
de manière facultative, le câble (1, 111) comme tel est relié à un élément constitué d'un matériau ferromagnétique (300) ou comprend un tel morceau d'une manière telle que des vibrations mécaniques de l'objet (200) comprenant également un matériau ferromagnétique peuvent exciter les vibrations mécaniques de l'élément constitué d'un matériau ferromagnétique (300) par l'intermédiaire des forces d'interaction magnétique (M) entre l'objet (200) et l'élément constitué d'un matériau ferromagnétique (300).
